Europäisches Patentamt

European Patent Office

Office européen des brevets

(11) Veröffentlichungsnummer: **0 009 542**
**A1**

# (12) EUROPÄISCHE PATENTANMELDUNG

(21) Anmeldenummer: 79102285.8

(22) Anmeldetag: 05.07.79

(51) Int. Cl.³: **B 23 K 9/08**

(30) Priorität: 07.07.78 DE 2829928

(43) Veröffentlichungstag der Anmeldung:
16.04.80 Patentblatt 80/8

(84) Benannte Vertragsstaaten:
BE DE FR GB IT NL SE

(71) Anmelder: Industrie-Werke Karlsruhe Augsburg
Aktiengesellschaft
Gartenstrasse 71
D-7500 Karlsruhe 1(DE)

(72) Erfinder: Altstetter, Manfred, Ing.-grad.
Amselweg 12
D-8901 Wulfertshausen(DE)

(72) Erfinder: Ganowski, Franz-Josef, Dipl.-Ing.
Haus Nr. 46
D-8901 Maingründel(DE)

(72) Erfinder: Pache, Norbert
Zumarshauser Weg71
D-8900 Augsburg(DE)

(72) Erfinder: Mazac, Karel, Dipl.-Ing.
Nebelhornstrasse 2
D-8900 Augsburg(DE)

(74) Vertreter: Ernicke, Hans-Dieter, Dipl.-Ing.
Schwibbogenplatz 2b
D-8900 Augsburg(DE)

(54) **Magnetspule für das Schweissen mit magnetisch bewegtem Lichtbogen.**

(57) Eine Magnetspule (7,8) zur Anwendung beim Schweißen mit magnetisch bewegtem Lichtbogen, und zwar zum Schweißen mit einem zwischen einer Hilfselektrode (6) und einer wulstartigen Schweißkantennahtbahn (5) bewegten Lichtbogen wird dadurch verbessert, daß ein den Konturen der Werkstücke (3,4) angepaßter Spulenkern (7) über diese Werkstücke gesteckt wird, wobei auf Grund der aufgebrachten Spulenwickelung (3) ein senkrecht zur Schweißebene gerichtetes Magnetfeld (BL) erzeugt wird.

Die Magnetspule (7,8) dient der besseren Anwendungsmöglichkeit des Schweißens mit magnetisch bewegtem Lichtbogen, und zwar insbesondere im Hinblick auf dickere Wandstärken.

./...

FIG. 2

Magnetspule für das MBL-Schweißen

Die vorliegende Erfindung bezieht sich auf eine Magnetspule zur Anwendung beim MBL-Schweißen insbesondere geschlossener Konturen mit in der Ebene zwischen einer nicht
abschmelzenden Hilfselektrode und einer wulstartigen
Schweißkantennahtbahn bewegtem Lichtbogen.

Das Schweißen mit magnetisch bewegtem Lichtbogen (MBL-
Schweißen) ist ein Verfahren, auf dessen Basis bereits
erste vollautomatische Produktionsmaschinen arbeiten und
ihre Bewährungsprobe bestanden haben. Es stellt eine sinnvolle Ergänzung des Abbrenn-, Stumpf-, Rollennaht-, Wig-, Mig-, Mag- und Reibstumpfschweißens dar und wird meist zum Schweißen von Rohren oder Werkstücken mit rohrförmigem Ansatz verwendet. Diese Teile müssen jedoch nicht drehsymmetrisch sein.

Das Ziel einer optimalen Investition, minimaler Aufwand bei größtem wirtschaftlichen Nutzen, kann nur erreicht werden, wenn das neue Verfahren eingebettet in die anderen oben erwähnten Techniken gesehen wird.

Seine Vorteile sind eindeutig. Sie sind sowohl wirtschaftlicher als auch schweißtechnischer Natur und stellen eine Synthese der bisher bekannten Vorteile des Widerstand-Lichtbogen- und Reibschweißens dar.

Die zwei grundsätzlich möglichen Anordnungen beim Schweißen mit magnetisch bewegtem Lichtbogen sind:

a) Das Schweißen mit einem sich bewegenden Lichtbogen zwischen den zu verbindenden Werkstücken.

b) Das Schweißen mit einem zwischen einer nicht abschmelzenden Hilfselektrode und den Werkstücken sich bewegenden Lichtbogen.

0009542

Die physikalischen Grundlagen für das Wandern bzw. Rotieren des Lichtbogens um die Stirnfläche der Werkstücke
finden sich in den elektrotechnischen Grundgesetzen.
Hiernach wird jeder Stromfluß von einem Magnetfeld begleitet, wobei aus Gründen der Symmetrie diese magnetischen
Feldlinien bei einem Rundleiter konzentrische Kreise bilden. Im Falle des Stromflusses in einem Lichtbogen kann
dieser näherungsweise ebenfalls als Rundleiter betrachtet
werden. Befindet er sich in einem zusätzlichen staionären
Magnetfeld, so überlagern sich dessen Feldlinien mit denen
des Lichtbogens. Da einerseits die magnetischen Feldlinien
aus energetischen Gründen stets das Bestreben haben sich
zu verkürzen und andererseits das zusätzliche Magnetfeld
örtlich fest liegt, wirkt auf den Lichtbogen eine magnetische Kraft. Die Richtung dieser Kraft ist mittels der
sogenannten Dreifingerregel der linken Hand auffindbar.

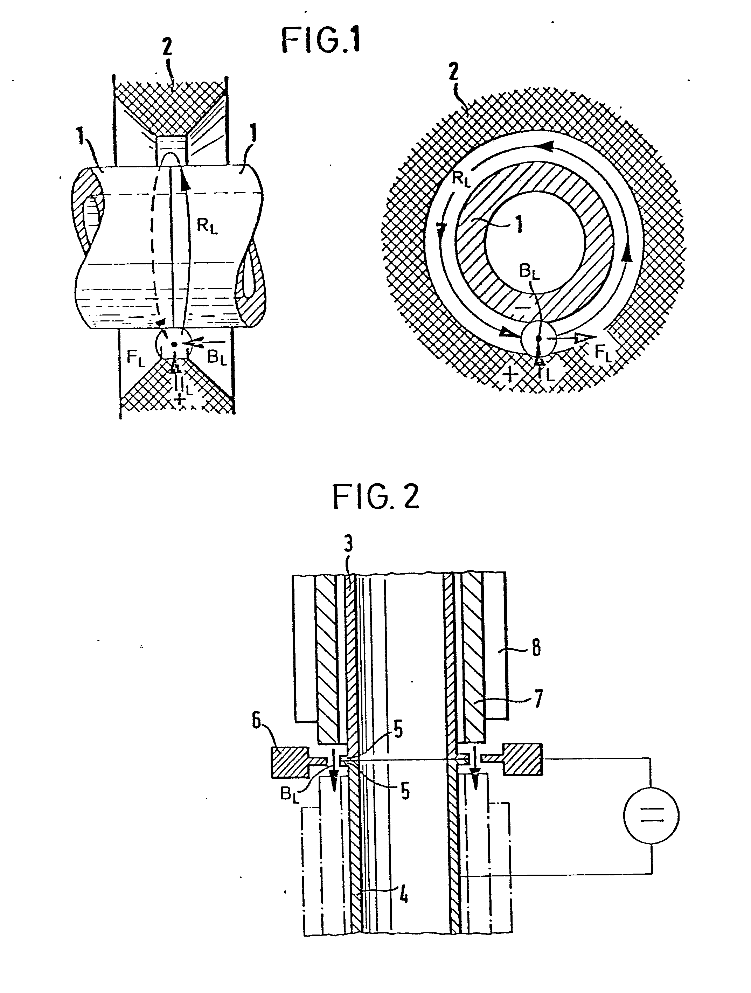

Das Grundprinzip des Schweißens mit magnetisch bewegtem
Lichtbogen, und zwar eines zwischen einer nicht abschmelzenden Hilfselektrode und den Werkstücken bewegtem Lichtbogen ist in Fig. 1 dargestellt. Nach dem Zünden des Lichtbogens zwischen den Werkstücken 1 und der Hilfselektrode 2
bewirkt die Wechselwirkung zwischen dem Lichtbogenstrom $I_L$
und einem Magnetfeld $B_L$ eine Kraft $F_L$, die eine Rotation $R_L$
des Lichtbogens verursacht.

Zur Erzeugung des stationären Magnetfeldes ist es aus der deutschen Patentschrift 23 21 070 bekannt, eine Mehrzahl gleichpoliger Einzelmagnete in der Schweißebene anzuordnen. Aus dieser Patentschrift ist es auch bereits bekannt, das Magnetfeld der einzelnen Magnete in einem die geschlossene Schweißkantennahtbahn umgebenden magnetisierbaren Ring zu vereinigen. Diese Art und Weise der Magnetfelderzeugung findet bei beiden obengenannten prinzipiellen Anordnungen Anwendung. Während nun jedoch beim Schweißen mit einem sich zwischen den zu verbindenden Werkstücken bewegenden Lichtbogen auf Grund der dabei erforderlichen Magnetfeldrichtung die wirksame Feldstärke ausreichend ist, genügt das mit der für das MBL-Schweißen bekannten Anordnung der Magnetspulen erreichbare Feld bei der oben unter b) genannten Anordnung nicht. Mit den bekannten Magnetspulen ist das erforderliche, senkrecht zum Lichtbogen stehende Magnetfeld relativ schwach und kann, da es sich nur um Streufeldkomponenten handelt, nicht im erforderlichen Maß vergrößert werden. Die bekannte Anordnung ist somit nur für relativ kleine Schweißströme (bis ca. 200 A) und dementsprechend geringe Dicken der zu schweißenden Werkstücke anwendbar. Bei größeren Schweißströmen reicht die magnetische Feldstärke nicht mehr aus, den Lichtbogen im erforderlichen Maße und mit der erforderlichen Exaktheit zu bewegen.

Die der vorliegenden Erfindung zugrundeliegende Aufgabe ist es, eine Magnetspule anzugeben, mit der ein MBL-Schweißen mit zwischen einer Hilfselektrode und einer wulstartigen Schweißkantennahtbahn bewegtem Lichtbogen auch dickerer Wandstärken möglich ist.

Diese Magnetspule ist dadurch gekennzeichnet, daß ein hinsichtlich der Form und Abmessungen den zu schweißenden Werkstücken entsprechender Spulenkern vorgesehen ist, der derart mit einer Wicklung versehen ist, daß die Magnetspule senkrecht zur Ebene des Lichtbogens unmittelbar an diese Ebene heranführbar ist und ein senkrecht zu dieser Ebene gerichtetes Magnetfeld entsteht.

Die erfindungsgemäße Magnetspule wird im Folgenden anhand der Fig. 2 näher erläutert.

Die prinzipielle Anordnung umfaßt zwei metallische Rohre 3 und 4, die jeweils am Rohrende einen radial umlaufenden (wulstartigen) Ansatz 5 aufweisen. Beide Rohre liegen an diesem Ansatz flächig aneinander an, womit im Bereich dieser Anlagefläche die Schweißkantennahtbahn gebildet ist. Dieser Schweißkantennahtbahn liegt eine nicht abschmelzende Hilfselektrode 6 gegenüber, die wie auch eines der Rohre mit (je) einem Pol einer Stromquelle 7 verbunden ist.

Zwischen der Hilfselektrode und der Schweißkantennahtbahn liegt somit ein elektrisches Feld, das nach dem Zünden des Lichtbogens diesen aufrechterhält.

Um den Lichtbogen auf eine Bahn längs der Schweißkantennahtbahn zu zwingen, muß ein magnetisches Feld $B_L$ wirken, dessen Richtung senkrecht zur Ebene des Spaltes zwischen Hilfselektrode und Schweißkantennahtbahn steht. Dieses Magnetfeld wird erfindungsgemäß mit einer Magnetspule erzeugt, die aus einem Spulenkern 7 und einer aufgebrachten Wicklung 8 besteht, wobei diese Wicklung in Bezug auf den Spulenkern so konfiguriert ist, daß er nahe an die Ebene in der der Lichtbogen rotiert herangeführt werden kann. Die Wicklung 8 ist um diesen Spulenkern so geführt, daß der Spulenkern 7 praktisch als Stabmagnet wirkt, dessen einer Pol genau auf die Lichtbogenebene einwirkt. Es versteht sich von selbst, daß die Wirkung des Magnetfeldes umso besser ist, je besser der Spulenkern an seiner Polseite dem Spalt zwischen Hilfselektrode und Schweißkantennahtbahn angepaßt ist.

Gegebenenfalls und zwar zwecks weiterer Verstärkung des Magnetfeldes kann - wie in der Fig. 2 gestrichelt angedeutet - eine weitere erfindungsgemäße Magnetspule an die Lichtbogenbahn herangeführt werden. Diese beiden dann gemeinsam wirkenden Magnetspulen müssen selbstverständlich so umwickelt und von einem solchen Strom durchflossen sein, daß beide Magnetfelder sich in der Lichtbogenebene additiv überlagern. In jedem Falle wird ein Magnetfeld erzeugt, das, da die Hauptrichtung infolge der koaxialen Zuordnung von Werkstück (Rohr) und Spulenkern und entsprechender Wicklungskonzeption ebenfalls koaxial liegt, genau senkrecht auf den Lichtbogen wirkt.

Auf Grund der in Fig. 2 dargestellten prinzipiellen Konfiguration der erfindungsgemäßen Magnetspule sind viele Anwendungsbeispiele denkbar.

So lassen sich mit der erfindungsgemäßen Magnetspule auch Innenschweißungen ausführen, wobei eine zentrale Hilfselektrode radial von einer Bördelnaht umgeben ist. Die erfindungsgemäße Magnetspule - dimensionsmäßig dem Ringspalt zwischen Elektrode und Werkstück angepaßt - wird über dem Ringspalt angeordnet und erzeugt ein senkrecht zur Ebene des Ringspaltes gerichtetes Magnetfeld.

Ein weiterer bevorzugter Anwendungsfall bezieht sich auf das Aufschweißen eines Flansches auf ein Rohr. Die erfindungsgemäße Magnetspule ermöglicht diesbezüglich ein einwandfreies und sicheres Schweißen.

Zusammenfassend läßt sich feststellen, daß mit der erfindungsgemäßen Magnetspule das Anwendungsspektrum des MBL-Schweißens im Hinblick auf die eingangs unter b) genannte Grundkonzeption erheblich erweitert wird.

0009542

PATENTANSPRUCH

Magnetspule zur Anwendung beim MBL-Schweißen insbesondere
geschlossener Konturen mit in der Ebene zwischen einer
nicht abschmelzenden Hilfselektrode und einer wulstartigen
Schweißkantennahtbahn bewegtem Lichtbogen,
dadurch gekennzeichnet,
daß ein hinsichtlich der Form und Abmessungen den zu
schweißenden Werkstücken entsprechender Spulenkern
vorgesehen ist, der derart mit einer Wicklung versehen ist,
daß die Magnetspule senkrecht zur Ebene des Lichtbogens
unmittelbar an diese Ebene heranführbar ist und ein
senkrecht zu dieser Ebene gerichtetes Magnetfeld entsteht.

0009542

# FIG.1

# FIG. 2

Europäisches
Patentamt

**EUROPÄISCHER RECHERCHENBERICHT**

0009542
Nummer der Anmeldung

EP 79 10 2285

| Kategorie | Kennzeichnung des Dokuments mit Angabe, soweit erforderlich, der maßgeblichen Teile | betrifft Anspruch |
|---|---|---|
| | DE - B - 1 253 839 (FOSTER WHEELER) <br> * Spalte 3, Zeilen 14-44 * <br> & GB - A - 1 045 149 <br><br> -- <br><br> DE - A - 2 015 570 (SIMMERING) <br> * Figur 4; Seite 4, Absatz 5 - Seite 5, Absatz 1 * <br><br> -- | 1 <br><br><br><br><br><br> 1 |
| P | DE - A - 2 729 204 (INDUSTIEWERKE KARLSRUHE) <br> * Figur 1; Seite 12, Absatz 2 * <br><br> -- <br><br> SCHWEISSEN UND SCHNEIDEN, Jahrgang 26, Heft 7, 1974, Düsseldorf (DE) <br> F.J. GANOWSKI, "Pressschweissen mit magnetisch bewegtem Lichtbogen", Seiten 251-253. <br> * Seite 251, Bild 1,b; Seite 252, Bild 3 * <br><br> ---- | 1 <br><br><br><br><br> 1 |

**EINSCHLÄGIGE DOKUMENTE**

**KLASSIFIKATION DER ANMELDUNG (Int.Cl. 3)**

B 23 K 9/08

**RECHERCHIERTE SACHGEBIETE (Int. Cl. 3)**

B 23 K 9/08
B 23 K 9/06

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 09-10-1979 | HOORNAERT |

EPA form 1503.1 06.78